# EUROPEAN PATENT APPLICATION

(11) **EP 3 402 119 A1**
(43) Date of publication of application: **14.11.2018**
(21) Application number: 17889530.6
(22) Date of filing: 15.03.2017
(51) Int. Cl.: H04L 12/00

(54) **DOUBLE-BACKUP CONFERENCE UNIT AND DOUBLE-BACKUP CONFERENCE SYSTEM**

(71) Applicant: Shenzhen Taiden Industrial Co., Ltd., Nanshan District, Shenzhen Guangdong 518000 (CN)
(72) Inventor: ZHOU, Qingxu, Shenzhen Guangdong 518000 (CN)
(74) Representative: Flügel Preissner Schober Seidel
(86) International application number: PCT/CN2017/076809
(87) International publication number: WO 2018/165918

(57) **Abstract**

A dual backup conference unit (10) and a dual backup conference system, the dual backup conference unit (10) being in connection with a conference system control host (20) of the conference system, wherein, the dual backup conference unit (10) comprises: an audio pickup circuit (110), a conference unit circuit (130), and a backup circuit (120). The audio pickup circuit (110) is configured to collect an audio signal, the backup circuit (120) is configured to process the audio signal and output the processed audio signal to the conference unit circuit (130) and to enable the conference unit circuit (130) to output a first audio signal to the conference system control host (20), and the backup circuit (120) outputs a second audio signal. By collecting the audio signal by the same audio pickup circuit and outputting two paths of audio signals, the problem that the difference in audio signals collected by two audio pickup circuits affect the output sound quality of the conference system is solved, thereby being capable of effectively improving the output sound quality of the conference system.

## Description

### TECHNICAL FIELD

The present application relates to the technical field of audio processing, and more particularly to a dual backup conference unit and a dual backup conference system.

### BACKGROUND

A conference system is a professional audio device used in a conference hall and capable of realizing various functions such as speaking, listening, simultaneous interpretation, and electronic voting. The existing conference system consists of conference units and a conference system control host. The conference units are arranged in the conference hall for use by the conference delegates. The conference system control host is arranged in a control room and controlled by an operator. In order to realize the speaking function, each of the above conference units is provided with a microphone to pick up the audio signal.

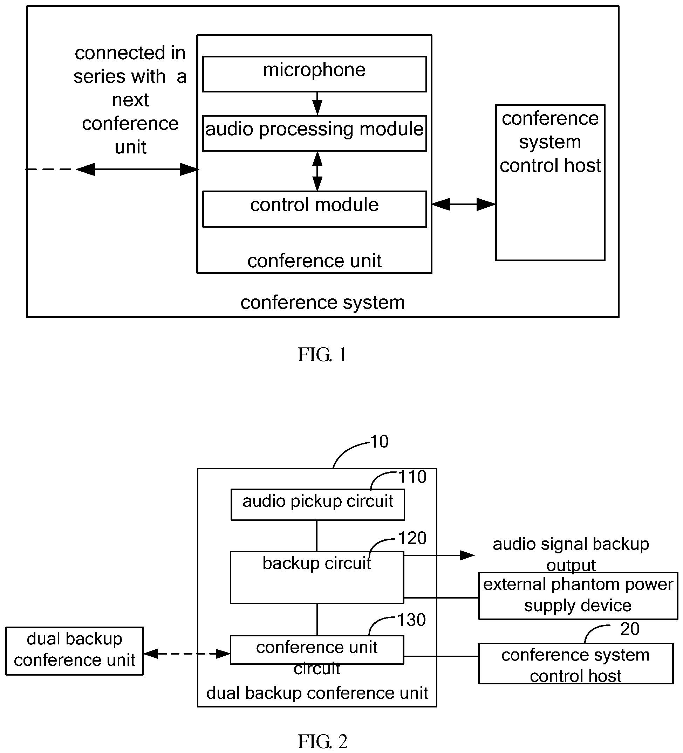

As shown in FIG. 1, which is a structure schematic diagram of the existing conference system, when the conference delegate speaks, the microphone of the conference unit picks up the audio signal and transmits the audio signal to the conference unit, the audio signal is transferred through the audio processing module and the control module to the conference system control host. After being processed by the conference system control host, the audio signal is transmitted, and the control module supplies power to the microphone and the audio processing module.

In a transmission path of a single-link audio signal, abnormality or failure of any site will result in interruption of the audio transmission. Therefore, when the conference hall needs to improve the reliability, the conference hall will be equipped with two sets of conference systems, or provided with two conference units, such that when one of the conference systems or one of the two conference units fails, the backup system/unit is instantly started, however, the switch between the main conference system/unit and the backup conference system/unit requires manual operation, which cannot realize real-time hot backup. In order to realize the hot backup, two sets of conference systems generally work at the same time, and the audios of the two sets of systems/units are simply mixed.

Because the audio signals picked up by the two microphones have differences, the mixing of the two audio signals will affect the output sound quality of the conference system. In addition, when the audios of the two sets of systems/units are simply mixed, even for the audio signals picked up by the same microphone, the mixing of the audios also affect the output sound quality of the conference system because the difference in transmission paths of the two paths of the audio signals would result in the phase difference of the two paths of the audio signals.

Thus, the existing hot backup conference system has the problem of poor output sound quality.

### SUMMARY

It is an object of the present application to provide a dual backup conference unit and a dual backup conference system, which aim at solving the problem of poor output sound quality in the existing hot backup conference system.

The present application provides a dual backup conference unit, in connection with a conference system control host of a conference system and an external phantom power supply. The dual backup conference unit comprises: an audio pickup circuit, a conference unit circuit, and a backup circuit;
an input terminal of the backup circuit is connected to an output terminal of the audio pickup circuit, a first audio output terminal of the backup circuit is connected to an audio input terminal of the conference unit circuit, a first power input terminal of the backup circuit is connected to a power output terminal of the conference unit circuit, a second power input terminal of the backup circuit is connected to the external phantom power supply, the conference unit circuit is connected to the conference system control host, and the conference unit circuit is further connected to a conference unit circuit of a next dual backup conference unit; and
the audio pickup circuit is configured to collect an audio signal, the backup circuit is configured to process the audio signal and output the processed audio signal to the conference unit circuit to enable the conference unit circuit to output a first audio signal to the conference system control host, the backup circuit is configured to output a second audio signal as an audio signal backup output of the dual backup conference unit, the conference unit circuit is configured to provide a first power supply to the backup circuit, and the external phantom power supply is configured to provide a second power supply to the backup circuit.

The present application further provides a dual backup conference system, comprising a conference system control host and a conference backup controller. The conference system further comprises the above-described dual backup conference unit. The dual backup conference unit outputs the first audio signal to the conference system control host, the dual backup conference unit outputs the second audio signal to the conference backup controller; the conference backup controller provides the second power supply to the dual backup conference unit; and when malfunction of the dual backup conference unit during the audio signal transmission is detected, the conference backup controller opens an audio transmission channel corresponding to the dual backup conference unit and realizes switching between a main transmission channel and a backup transmission channel.

In the dual backup conference unit and the dual backup conference system provided by the present application, the audio signal is received by the audio pickup circuit of the dual backup conference unit. The backup circuit processes the audio signal and then outputs the audio signal to the conference unit circuit to enable the conference unit circuit to output the first audio signal to the conference system control host. The backup circuit outputs the second audio signal as the audio signal backup output, and the external phantom power supply supplies the second power supply to the backup circuit. When the conference unit is detected to have failed during the audio signal transmission, the conference backup controller opens the audio input channel corresponding to the conference unit, thereby realizing the switch between the main transmission channel and the backup transmission channel and ensuring the unremittance of the audio transmission. By picking up the audio signal by the same audio pickup circuit and dividing the audio signal into two paths of the audio signals for outputting, it is solved the problem that the audio signals picked up by the two audio pickup circuits have difference, which affects the output sound quality of the conference system when the audio signal are mixed. By detecting whether or not the dual backup conference unit fails using the conference backup controller and by controlling the switch between the main transmission channel and the backup transmission channel, it is ensured that only one of the two paths of the audio signals of the same conference unit enters the sound amplifying system of the conference hall during the same time period, so that it is solved the problem that the difference in transmission paths of the two paths of audio signals results in phase difference in the two paths of audio signals which further affects the output sound quality of the conference system when the two paths of audio signals are mixed. Therefore, the output sound quality of the dual backup conference system can be effectively improved.

### BRIEF DESCRIPTION OF THE DRAWINGS

In order to more clearly describe the technical solutions in the embodiments of the present application, the drawings used in the description of the embodiments or the prior art will be briefly described below. Obviously, the drawings in the following description are some of the present application. Those of ordinary skill in the art can also obtain other drawings based on these drawings without paying any creative labor.
FIG. 1 is a schematic structural diagram of a conference system in the prior art;
FIG. 2 is a schematic structural diagram of a dual backup conference unit provided in Embodiment 1 of the present application;
FIG. 3 is a specific schematic diagram of the dual backup conference unit provided in Embodiment 1 of the present application;
FIG. 4 is a circuit schematic diagram of the dual backup conference unit according to Embodiment 1 of the present application;
FIG. 5 is a schematic structural diagram of a dual backup conference system provided by Embodiment 2 of the present application; and
FIG. 6 is another schematic structural diagram of the dual backup conference system provided by Embodiment 2 of the present application.

### DETAILED DESCRIPTION OF THE EMBODIMENTS

In order to make purposes, technical solutions, and advantages of the present application clearer and better understood, the present application is further described in detail with reference to the accompanying drawings and embodiments. It should be understood that the specific embodiments described herein are only used to explain the present application and are not used to limit the present application.

It should be noted that the term "comprise" and any variations thereof in the specification and claims of the present application are intended to cover non-exclusive inclusions. For example, a system, product, or device that comprise a series of units is not limited to the listed units, but may optionally also comprise units that are not listed, or may optionally comprise other units that are inherent to this product or device. In addition, the terms "first", "second", and "third," etc. are used to distinguish different objects but not to describe a particular sequence.

In order to solve the problem of poor output sound quality in the existing hot backup conference system, embodiments of the present application provide a dual backup conference unit and a dual backup conference system. In the dual backup conference unit and the dual backup conference system, the audio signal is received by the audio pickup circuit of the dual backup conference unit. The backup circuit processes the audio signal and then output the audio signal to the conference unit circuit to enable the conference unit circuit to output the first audio signal to the conference system control host. The backup circuit outputs the second audio signal as the audio signal backup output, and the external phantom power supply supplies the second power supply to the backup circuit. When the conference unit is detected to have failed during the audio signal transmission, the conference backup controller opens the audio input channel corresponding to the conference unit, thereby realizing the switch between the main transmission channel and the backup transmission channel and ensuring the unremittance of the audio transmission. By picking up the audio signal by the same audio pickup circuit and dividing the audio signal into two paths of the audio signals for outputting, it is solved the problem that the audio signals picked up by the two audio pickup circuits have difference, which affects the output sound quality of the conference system when the audio signal are mixed. By detecting whether or not the dual backup conference unit fails using the conference backup controller and by controlling the switch between the main transmission channel and the backup transmission channel, it is ensured that only one of the two paths of the audio signals of the same conference unit enters the sound amplifying system of the conference hall during the same time period, so that it is solved the problem that the difference in transmission paths of the two paths of audio signals results in phase difference in the two paths of audio signals, which further affects the output sound quality of the conference system when the two paths of audio signals are mixed. Therefore, the output sound quality of the dual backup conference system can be effectively improved. In addition, the conference system control host and the external phantom power supply or the conference backup controller supply power to the dual backup conference unit at the same time, which effectively avoids that the dual backup conference unit cannot work normally due to the malfunction of the main transmission channel.

In order to further introduce the above conference system, the conference system is described in detail by combining specific embodiments:

### Embodiment 1

FIG. 2 illustrates a structure of a dual backup conference unit provided by Embodiment 1 of the present application, for facilitating the description, only those related to the embodiment of the present application are illustrated, which are specifically as follows:
As shown in FIG. 2, the dual backup conference unit 10 provided by the Embodiment 1 of the present application is connected to a conference system control host 20 of a conference system and an external phantom power supply, and is characterized in that the dual backup conference unit 10 comprises: an audio pickup circuit 110, a conference unit circuit 130, and a backup circuit 120.

An input terminal of the backup circuit 120 is connected to an output terminal of the audio pickup circuit 110, a first audio output terminal of the backup circuit 120 is connected to an audio input terminal of the conference unit circuit 130, a first power input terminal of the backup circuit 120 is connected to a power output terminal of the conference unit circuit 130, a second power input terminal of the backup circuit 120 is connected to the external phantom power supply, the conference unit circuit 120 is connected to the conference system control host 20, and the conference unit circuit 130 is further connected to a conference unit circuit of a next dual backup conference unit.

The audio pickup circuit 110 is configured to collect an audio signal, the backup circuit 120 is configured to process the audio signal and output the processed audio signal to the conference unit circuit 130 to enable the conference unit circuit 130 to output a first audio signal to the conference system control host 20, the backup circuit 120 is configured to output a second audio signal as an audio signal backup output of the dual backup conference unit 10, the conference unit circuit 130 is configured to provide a first power supply to the backup circuit 120, and the external phantom power supply is configured to provide a second power supply to the backup circuit 120.

It should be noted that the dual backup conference unit 10 in this embodiment outputs the first audio signal to the conference system control host 20 as a main transmission channel, the conference unit 10 outputs the second audio signal as the audio signal backup output. The conference unit circuit 130 provides the first power supply to the backup circuit 120, and the external phantom power supply provides the second power supply to the backup circuit 120. By using the same audio pickup circuit 110 to collect the audio signal and output two paths of audio signals, it is solved the problem that audio signals picked up by two audio pickup circuits have differences, which affects the output sound quality of the conference system when the audio signals are mixed.

It should be noted that as a mode for carrying out this embodiment of the present application, the above conference system control host 20 and the external phantom power supply supply power to the backup circuit 120 at the same time. Even in the case that the main transmission channel fails to supply power to the backup circuit 120, the external phantom power supply can still supply power to the backup circuit 120, thereby ensuring the unremittance of the power supply to the backup circuit 120 and the audio pickup circuit 110.

It should be noted that conference unit circuits 130 of multiple dual backup conference units 10 are connected in series (in the form of a daisy chain) to the conference system control host 20 (each dual back conference unit is directly connected to the conference system control host, or alternatively connected to a former dual backup conference unit).

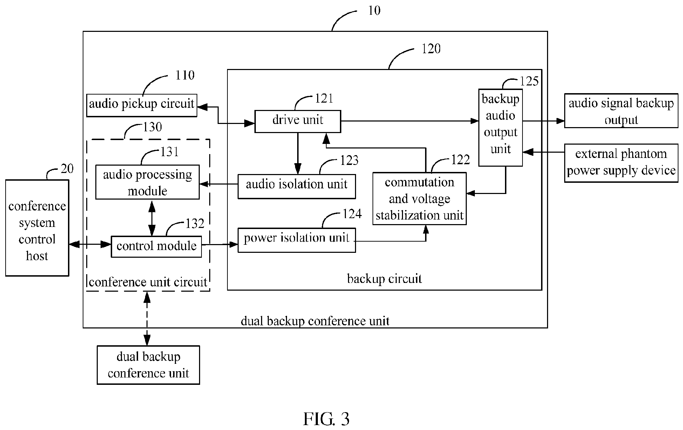

FIG. 3 illustrates a specific structure of a dual backup conference unit provided by the Embodiment 1 of the present application, as shown in FIG. 3, the backup circuit 120 comprises: a drive unit 121, a commutation and voltage stabilization unit 122, an audio isolation unit 123, a power isolation unit 124, and a backup audio output unit 125.

An audio input terminal of the drive unit 121 is the input terminal of the backup circuit 120, a power input terminal of the drive unit 121 is connected to an output terminal of the commutation and voltage stabilization unit 122, an input terminal of the audio isolation unit 123 is connected to a first output terminal of the drive unit 121, an output terminal of the audio isolation unit 123 is the first audio output terminal of the backup circuit 120, an input terminal of the backup audio output unit 125 is connected to a second output terminal of the drive unit 121, an audio output terminal of the backup audio output unit 125 is a second audio output terminal of the backup circuit 120, a power input terminal of the backup audio output unit 125 is the second power input terminal of the backup circuit 120, an input terminal of the power isolation unit 124 is the first power input terminal of the backup circuit 120, an output terminal of the power isolation unit 124 is connected to a first input terminal of the commutation and voltage stabilization unit 122, a second input terminal of the commutation and voltage stabilization unit 122 is connected to a power output terminal of the backup audio output unit 125, and an output terminal of the commutation and voltage stabilization unit 122 outputs a drive voltage Vcc.

The audio isolation unit 123 is configured to isolate the audio signal and then output the isolated audio signal to the conference unit circuit 130, the power isolation unit 124 is configured to isolate the first power supply obtained from the conference unit circuit 130 and output the isolated first power supply to the commutation and voltage stabilization unit 122, the backup audio output unit 125 is configured to output the second power supply obtained from the external phantom power supply to the commutation and voltage stabilization unit 122, and the commutation and voltage stabilization unit 122 is configured to process the first power supply and the second power supply and then output the processed first power supply and the processed second power supply to the drive unit 121 to drive the audio pickup circuit 110 to operate.

It should be noted that the first power supply is provided by conference system control host connected to the conference unit circuit, and the second power supply is provided by the external phantom power supply connected to the backup circuit.

It should be noted that, as shown in FIG. 3, the conference unit circuit 130 comprises an audio processing module 131 and a control module 132, an input terminal of the audio processing module 131 is connected to the output terminal of the audio isolation unit 123 of the backup circuit 120, the audio processing module 131 processes the received audio signal and then output the processed audio signal to the conference system control host 20 via the control module 132, and the control module 132 supplies power to the audio processing module 131 and at the same time provides the above first power supply to the power isolation unit 124 of the backup circuit 120.

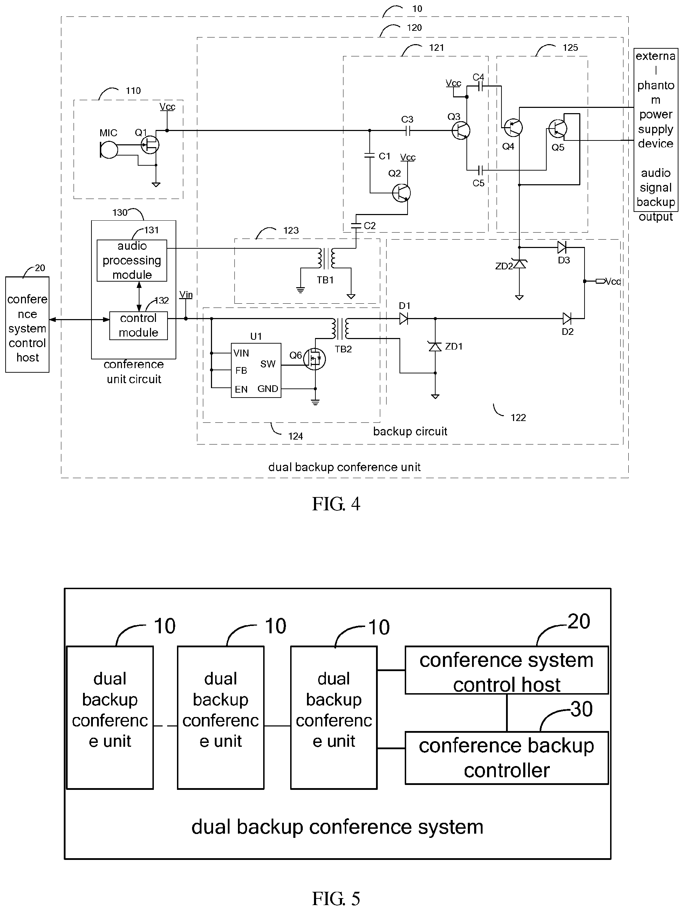

FIG. 4 illustrates a circuit structure of the dual backup conference unit of this embodiment of the present application.

Specifically, as shown in FIG. 4, as a mode for carrying out this embodiment of the present application, the audio pickup circuit 110 comprises a microphone MIC and N-type junction field effect transistor Q1.

A first terminal of the microphone MIC is connected to a gate of the N-type junction field effect transistor Q1, a second terminal of the microphone MIC is connected to a source of the N-type junction field effect transistor Q1, the source of the N-type junction field effect transistor Q1 is grounded, a drain of the N-type junction field effect transistor Q1 is connected to the drive voltage Vcc, and the drain of the N-type junction field effect transistor Q1 is the output terminal of the audio pickup circuit 110.

The drive unit 121 comprises: a first N-type triode Q2, a second N-type triode Q3, a first capacitor C1, a second capacitor C2, a third capacitor C3, a fourth capacitor C4, and a fifth capacitor C5.

A first terminal of the first capacitor C1 is a first input terminal of the drive unit 121, a second terminal of the first capacitor C1 is connected to a base of the first N-type triode Q2, a collector of the first N-type triode Q2 is connected to the drive voltage Vcc, an emitter of the first N-type triode Q2 is connected to a first terminal of the second capacitor C2, a second terminal of the second capacitor C2 acts as the first output terminal of the drive unit 121, a first terminal of the third capacitor C3 is connected to the first terminal of the first capacitor C1, a second terminal the third capacitor C3 is connected to a base of the second N-type triode Q3, a collector of the second N-type triode Q3 is connected to a first terminal of the fourth capacitor C4, a collector of the second N-type triode Q3 is connected to the drive voltage Vcc, an emitter of the second N-type triode Q3 is connected to a first terminal of the fifth capacitor C5, a second terminal of the fourth capacitor C4 and a second terminal of the fifth capacitor C5 jointly form the second output terminal of the drive unit 121.

The audio isolation unit 123 comprises a first transformer TB1.

A first input pin of the first transformer TB1 acts as the input terminal of the audio isolation unit 123, a second input pin of the first transformer TB1 is grounded, a first output pin of the first transformer TB1 acts as the output terminal of the audio isolation unit 123, and a second output pin of the first transformer TB1 is grounded.

The power isolation unit 124 comprises: a power chip U1, an N-type metallic oxide semiconductor field effect transistor (MOSFET) Q6, and a second transformer TB2.

A first input pin of the second transformer TB2 and a power input pin VIN, a feedback pin FB, and an enabling pin EN of the power chip U1 together form the input terminal of the power isolation unit 124, a switching pin SW of the power chip U1 is connected to a gate of an N-type MOSFET Q6, a ground pin GND of the power chip U1 is grounded, a source of the N-type MOSFET Q6 is grounded, a drain of the N-type MOSFET Q6 is connected to a second input pin of the second transformer TB2, a first output pin of the second transformer TB2 is the output terminal of the power isolation unit 124, and a second output pin of the second transformer TB2 is grounded. It should be noted that the power input pin of the power chip U1 is also connected to the first power supply voltage Vin.

The commutation and voltage stabilization unit 122 comprises: a first diode D1, a second diode D2, a third diode D3, a first zenzer diode ZD1, and a second zenzer diode ZD2.

A positive electrode of the first diode D1 acts as the first input terminal of the commutation and voltage stabilization unit 122, a negative electrode of the first diode D1 is connected to a negative electrode of the first zenzer diode ZD1, a positive electrode of the first zenzer diode ZD1 is grounded, a positive electrode of the second diode D2 is connected to a negative electrode of the first diode D1, a positive electrode of the third diode D3 is the second input terminal of the commutation and voltage stabilization unit 122, and a negative electrode of the second zenzer diode ZD2 is connected to a positive electrode of the third diode D3, a positive electrode of the second zenzer diode ZD2 is grounded, a negative electrode of the second diode D2 and the negative electrode of the third diode D3 jointly form the output terminal of the commutation and voltage stabilization unit 122.

The backup audio output unit 125 comprises a first P-type triode Q4 and a second P-type triode Q5.

A base of the first P-type triode Q4 and a base of the second P-type triode Q5 together form the input terminal of the backup audio output unit 125, a collector of the first P-type triode Q4 and a collector of the second P-type triode Q5 together form the power output terminal of the backup audio output unit 125, an emitter of the first P-type triode Q4 and an emitter of the second P-type triode Q5 together form the audio output terminal of the backup audio output unit 125.

It should be noted that, in practical application, the above first P-type triode Q4 and the second P-type triode Q5 can be an integrated component. The above power chip U1 functions in starting, the DC voltage provided by the conference unit circuit 130 is converted into an AC voltage by the second transformer TB2, and the AC voltage is performed with commutation and voltage stabilization by the commutation and voltage stabilization unit 122 so as to provide a bias voltage to the microphone MIC.

It should be noted that the first transformer TB1 of the audio isolation unit 123 and the second transformer TB2 of the power isolation unit 124 can function in isolation. The output audio signal is isolated by using the audio isolation unit 123 and then input to the conference unit circuit, the input first power supply is isolated by using the power isolation unit 124 and then input to the commutation and voltage stabilization unit 122, which are able to effectively solve the signal interference caused by non-common grounding of the conference unit circuit and the backup circuit.

It should be noted that the first power supply voltage Vin provides a +3V power supply voltage to the backup circuit 120, and the above drive voltage Vcc is a +5V voltage.

The above conference system is further described by combining the working principle and FIG. 4.

The audio signal collected by the microphone MIC of each conference unit is divided into two paths by the drive unit 121. One path of the audio signal is isolated by the audio isolation unit 123 and output to the conference unit circuit 130 where the isolated audio signal is processed by the audio processing module of the conference unit circuit 130 and then output to the control module, the first audio signal is output from the control module to the conference system control host 20, and then output to a sound amplifying system in the conference hall via the conference system control host 20. The other path of the audio signal is differentially processed by the first P-type triode Q4 and the second P-type triode Q5 of the backup audio output unit 125 and then used as the audio signal backup output.

At the same time the above audio signal is divided into two paths of outputs, both the conference system control host 20 and the external phantom power supply provide the bias voltages to the microphone MIC. Specifically, the conference system control host 20 provides the first power supply to the commutation and voltage stabilization unit 122 via the conference unit circuit 130 connected to the conference system control host 20, and the first power supply is isolated by the power isolation unit 124 and then output to the commutation and voltage stabilization unit 122. The external phantom power supply provides the second power supply to the communication and voltage stabilization unit 122 via the backup audio output unit 125 connected to the external phantom power supply, the commutation and voltage stabilization unit 122 controls the conductance of the first power supply and the conductance of the second power supply to output the drive voltage by the second diode D2 and the third diode D3, respectively, to enable the drive unit 121 to provide the bias power supply for driving the microphone MIC, thereby ensuring the unremitted power supply to the microphone MIC.

### Embodiment 2

FIG. 5 illustrates a structure of a conference system provided by the Embodiment 2 of the present application. For facilitating the description, only those related to this embodiment of the present application are shown, which are specifically as follows:
As shown in FIG. 5, the conference system provided by this embodiment of the present application comprises a dual backup conference unit 10, a conference system control host 20, and a conference backup controller 30.

The dual backup conference unit 10 is connected to the conference system control host 20 and the conference backup controller 30 respectively, the conference backup controller 30 is connected to the conference system control host 20.

The dual backup conference unit 10 outputs the first audio signal to the conference system control host 20 and outputs the second audio signal to the conference backup controller 30.

The conference backup controller 30 receives the audio signal transmitted from the dual backup conference unit 10, and matches each path of the input audio signal with the conference unit inputting the audio signal. The state of the dual backup conference unit 10 is detected by the conference system control host 20, and when malfunctions of the dual backup conference unit 10 is detected during the audio signal transmission, the audio input channel corresponding to the dual backup conference unit 10 is controlled to be opened.

It should be noted that the first audio signal is output from the dual backup conference unit 10 to the conference system control host 20, which serves as the main transmission channel, and the second audio signal is output from the dual backup conference unit 10 to the conference backup controller 30, which serves as the backup transmission channel. During the normal transmission process of the dual backup conference unit 10, the main transmission channel is used to transmit the audio signal, and the audio signal is output from the conference system control host 20 to the sound amplifying system in the conference hall. When the main transmission channel of the dual backup conference unit 10 fails, the conference backup controller 30 will automatically open the backup transmission channel to transmit the audio signal and output the audio signal to the sound amplifying system, such that the switch between the main transmission channel and the backup transmission channel is achieved and the unremittance of audio signal transmission is ensured. By using the conference backup controller 30 to detect whether or not the dual backup conference unit 10 fails and to control the switch between the main transmission channel and the backup transmission channel, it is ensured that only one of the two paths of the audio signals of the same conference unit enters the sound amplifying system of the conference hall during the same time period, so that it is solved the problem that the difference in transmission paths of the two paths of audio signals results in phase difference in the two paths of audio signals, which further affects the output sound quality of the conference system when the two paths of audio signals are mixed; and therefore, the output sound quality of the dual backup conference system can be effectively improved.

It should be noted that as a mode for carrying out this embodiment, the conference backup controller 30 comprises: an audio input module, a detection module, a control module, a main/backup system configuration module, and an audio output module.

The audio input module receives the audio signal transmitted from the dual backup conference unit 10, the main/backup system configuration module matches each path of the input audio signal of the conference backup controller with the dual backup conference unit inputting the audio signal, and the detection module detects the state of the dual backup conference unit 10 by the conference system control host 20. When it is detected that the dual backup conference unit 10 fails during the audio signal transmission, the control module controls the audio input channel corresponding to the dual backup conference unit 10 to be opened.

It should be noted that the conference hall is generally provided with a plurality of conference units, the matching of each path from a certain conference unit to the conference backup controller with the signal transmitted by the path conducted by the main/backup system configuration module is to correspond the output audio signal with the conference unit respectively, and when the detection module detects that the main transmission channel of a certain path of conference unit has transmission functions, the control module controls the backup transmission channel of the corresponding path to be opened.

Further, the above conference backup control can also comprises a phantom power supply module. The phantom power supply module is connected to the above audio input module, and the phantom power supply module supplies power to the conference unit. As an mode for carrying out this embodiment, the above phantom power supply module provides a +48V phantom power supply to the microphone, which can avoid the circumstance that the audio pickup circuit of the conference unit is unable to work normally due to the malfunction of the main transmission channel.

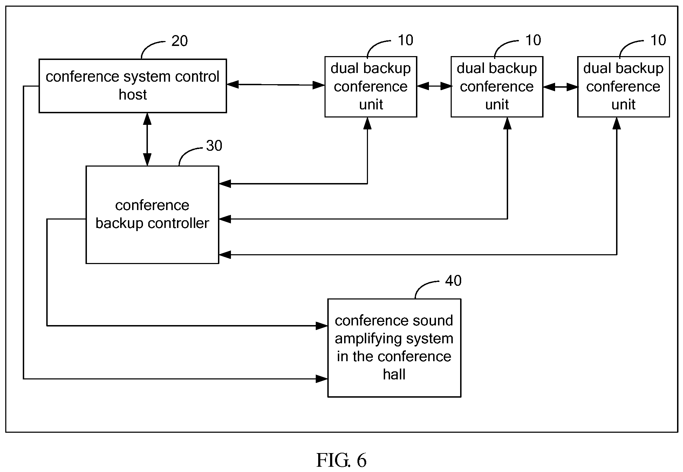

As shown in FIG. 6, a structural schematic block diagram provided by this embodiment of the present application is illustrated. The conference system illustrated in FIG. 6 may comprise: one or more dual backup conference unit 10, a conference system control host 20, a conference backup controller 30, and a sound amplifying system 40 of the conference hall. The dual backup conference unit 10 is respectively connected to the conference system control host 20 and the conference backup controller 30, the conference system control host 20 is connected to the conference backup controller 30, and the sound amplifying system 40 of the conference hall is respectively connected to the conference system control host 20 and the conference backup controller 30.

An inner part of the dual backup conference unit 10 is provided with a microphone, a backup circuit, and a conference unit circuit, for acquiring the audio signal, and dividing the audio signal into two paths, and transmitting the two paths of the audio signals to the conference system control host and the conference backup controller.

The conference system control host 20 is used to receive the first audio signal and control the main transmission channel to perform audio signal transmission, and to transmit the first audio signal to the amplifying system 40 of the conference hall.

The conference backup controller 30 is used to receive the second audio signal and controls the backup transmission channel to conduct the audio signal transmission in case of malfunction of the main transmission channel, and to transmit the second audio signal to the amplifying system 40 of the conference hall.

Further, the conference system control host 20 and the conference backup controller 30 are also used to supply power to the backup circuit 120 inside the dual backup conference unit.

Further, the conference backup controller 30 is also used to detect whether or not the main transmission channel between the dual backup conference unit 10 and the conference system control host 20 has transmission malfunction.

In the specific embodiment, the dual backup conference unit 10 acquires the audio signal by the microphone, processes the audio signal by the backup circuit, and outputs one path of the audio signal to the conference unit circuit. After being processed by the conference unit circuit, the first audio signal is output to the conference system control host 20, and the second audio signal is output to the conference backup controller 30. The conference system control host 20 outputs the first audio signal to the amplifying system 40 of the conference hall for playing, and when transmission channel between the dual backup conference unit 10 and the conference system control host 20 is detected to have malfunctions, the conference backup controller 30 controls the backup transmission channel between the conference backup controller 20 and the dual backup conference unit 10 to be opened and to transmit the second audio signal received from the dual backup conference unit 10 via the backup transmission channel, that is, the second audio signal is output to the amplifying system 40 of the conference hall for displaying. The main transmission channel and the backup transmission channel are automatically switched by the conference backup controller 30.

In the dual backup conference unit and the dual backup conference system provided by the embodiments of the present application, the audio signal is collected by the microphone of the audio pickup circuit, the audio signal is divided into two paths of signals for transmission after being processed by the drive unit. A first path of the audio signal is processed by the audio isolation unit and then the audio signal is transmitted to the conference unit circuit. After being processed by the conference unit circuit, the first audio signal is output to the conference system control host, and then the first audio signal is output from the conference system control host to the amplifying system of the conference hall. The second path of the audio signal is differentiated by the backup audio output unit to output the second audio signal to the conference backup controller, and when it is detected by the conference backup controller that the conference unit fails in the process of audio signal transmission, a corresponding backup transmission channel of the conference unit is opened under the control of the control module of the conference backup controller to transmit the audio signal, thereby automatically realizing the switch between the main transmission channel and the backup transmission channel and ensuring the unremittance of the audio transmission of the conference. By picking up the audio signal by the same microphone and dividing the audio signal into two paths of audio signals for outputting, it is avoided the problem that the difference in the audio signals picked up by two microphones would affect the output sound quality of the conference system when the audio signals are mixed, and therefore the output sound quality of the dual backup conference system can be effectively improved. In addition, the conference system control host and the conference backup controller supply power to the backup circuit of the conference unit at the same time, which effectively avoids that the audio pickup circuit of the conference unit cannot work normally because of malfunction of the main transmission channel.

The foregoing descriptions are merely preferred embodiments of the present application and are not intended to limit the present application. Any modification, equivalent replacement, and improvement made within the spirit and principle of the present application shall be included in the protection range of the present application.

## Claims

1. A dual backup conference unit, in connection with a conference system control host of a conference system and an external phantom power supply, wherein the dual backup conference unit comprises: an audio pickup circuit, a conference unit circuit, and a backup circuit;
an input terminal of the backup circuit is connected to an output terminal of the audio pickup circuit, a first audio output terminal of the backup circuit is connected to an audio input terminal of the conference unit circuit, a first power input terminal of the backup circuit is connected to a power output terminal of the conference unit circuit, a second power input terminal of the backup circuit is connected to the external phantom power supply, the conference unit circuit is connected to the conference system control host, and the conference unit circuit is further connected to a conference unit circuit of a next dual backup conference unit; and
the audio pickup circuit is configured to collect an audio signal, the backup circuit is configured to process the audio signal and output the processed audio signal to the conference unit circuit to enable the conference unit circuit to output a first audio signal to the conference system control host, the backup circuit is configured to output a second audio signal as an audio signal backup output of the dual backup conference unit, the conference unit circuit is configured to provide a first power supply to the backup circuit, and the external phantom power supply is configured to provide a second power supply to the backup circuit.

2. The dual backup conference unit of claim 1, wherein the audio pickup circuit comprises a microphone and N-type junction field effect transistor;
a first terminal of the microphone is connected to a gate of the N-type junction field effect transistor, a second terminal of the microphone is connected to a source of the N-type junction field effect transistor, the source of the N-type junction field effect transistor is grounded, a drain of the N-type junction field effect transistor is connected to a drive voltage, and the drain of the N-type junction field effect transistor is the output terminal of the audio pickup circuit.

3. The dual backup conference unit of claim 1, wherein the backup circuit comprises: a drive unit, a commutation and voltage stabilization unit, an audio isolation unit, a power isolation unit, and a backup audio output unit;
an audio input terminal of the drive unit acts as the input terminal of the backup circuit, a power input terminal of the drive unit is connected to an output terminal of the commutation and voltage stabilization unit, an input terminal of the audio isolation unit is connected to a first output terminal of the drive unit, an output terminal of the audio isolation unit acts as the first audio output terminal of the backup circuit, an input terminal of the backup audio output unit is connected to a second output terminal of the drive unit, an audio output terminal of the backup audio output unit acts as a second audio output terminal of the backup circuit, a power input terminal of the backup audio output unit acts as the second power input terminal of the backup circuit, an input terminal of the power isolation unit acts as the first power input terminal of the backup circuit, an output terminal of the power isolation unit is connected to a first input terminal of the commutation and voltage stabilization unit, a second input terminal of the commutation and voltage stabilization unit is connected to a power output terminal of the backup audio output unit, and an output terminal of the commutation and voltage stabilization unit outputs a drive voltage; and
the audio isolation unit is configured to isolate the audio signal and then output the isolated audio signal to the conference unit circuit, the power isolation unit is configured to isolate the first power supply obtained from the conference unit circuit and output the isolated first power supply to the commutation and voltage stabilization unit, the backup audio output unit is configured to output the second power supply obtained from the external phantom power supply to the commutation and voltage stabilization unit, and the commutation and voltage stabilization unit is configured to process the first power supply and the second power supply and then output the processed first power supply and the processed second power supply to the drive unit to drive the audio pickup circuit to operate.

4. The dual backup conference unit of claim 3, wherein the drive unit comprises:
a first N-type triode, a second N-type triode, a first capacitor, a second capacitor, a third capacitor, a fourth capacitor, and a fifth capacitor;
a first terminal of the first capacitor acts as a first input terminal of the drive unit, a second terminal of the first capacitor is connected to a base of the first N-type triode, a collector of the first N-type triode is connected to the drive voltage, an emitter of the first N-type triode is connected to a first terminal of the second capacitor, a second terminal of the second capacitor acts as the first output terminal of the drive unit, a first terminal of the third capacitor is connected to the first terminal of the first capacitor, a second terminal the third capacitor is connected to a base of the second N-type triode, a collector of the second N-type triode is connected to a first terminal of the fourth capacitor, a collector of the second N-type triode is connected to the drive voltage, an emitter of the second N-type triode is connected to a first terminal of the fifth capacitor, a second terminal of the fourth capacitor and a second terminal of the fifth capacitor jointly form the second output terminal of the drive unit.

5. The dual backup conference unit of claim 3, wherein the audio isolation unit comprises a first transformer;
a first input pin of the first transformer acts as the input terminal of the audio isolation unit, a second input pin of the first transformer is grounded, a first output pin of the first transformer acts as the output terminal of the audio isolation unit, and a second output pin of the first transformer is grounded

6. The dual backup conference unit of claim 3, wherein the power isolation unit comprises: a power chip, an N-type metallic oxide semiconductor field effect transistor (MOSFET), and a second transformer;
a first input pin of the second transformer and a power input pin, a feedback pin, and an enabling pin of the power chip together form the input terminal of the power isolation unit, a switching pin of the power chip is connected to a gate of an N-type MOSFET, a ground pin of the power chip is grounded, a source of the N-type MOSFET is grounded, a drain of the N-type MOSFET is connected to a second input pin of the second transformer, a first output pin of the second transformer acts as the output terminal of the power isolation unit, and a second output pin of the second transformer is grounded.

7. The dual backup conference unit of claim 3, wherein the commutation and voltage stabilization unit comprises: a first diode, a second diode, a third diode, a first zenzer diode, and a second zenzer diode;
a positive electrode of the first diode acts as the first input terminal of the commutation and voltage stabilization unit, a negative electrode of the first diode is connected to a negative electrode of the first zenzer diode, a positive electrode of the first zenzer diode is grounded, a positive electrode of the second diode is connected to a negative electrode of the first diode, a positive electrode of the third diode acts as the second input terminal of the commutation and voltage stabilization unit, and a negative electrode of the second zenzer diode is connected to a positive electrode of the third diode, a positive electrode of the second zenzer diode is grounded, a negative electrode of the second diode and the negative electrode of the third diode jointly form the output terminal of the commutation and voltage stabilization unit.

8. The dual backup conference unit of claim 3, wherein the backup audio output unit comprises a first P-type triode and a second P-type triode;
a base of the first P-type triode and a base of the second P-type triode together form the input terminal of the backup audio output unit, a collector of the first P-type triode and a collector of the second P-type triode together form the power output terminal of the backup audio output unit, an emitter of the first P-type triode and an emitter of the second P-type triode together form the audio output terminal of the backup audio output unit.

9. The dual backup conference unit of any of claims 1-8, wherein
the conference unit circuit comprises an audio processing module and a control module;
an input terminal of the audio processing module acts as the audio input terminal of the conference unit circuit, an output terminal of the audio processing module is connected to an input terminal of the control module, a first connecting terminal of the control module is connected to the conference system control host or a former dual backup conference unit, a second connecting terminal of the control module is connected to a next dual backup conference unit, the control module supplies power to the audio processing module, a power output terminal of the control module act as the power output terminal of the conference unit circuit and provides the first power supply to the backup circuit.

10. A dual backup conference system, comprising a conference system control host and a conference backup controller, wherein the conference system further comprises the dual backup conference unit of any of claims 1-9;
the dual backup conference unit is configured to output the first audio signal to the conference system control host, the dual backup conference unit is configured to output the second audio signal to the conference backup controller; the conference backup controller is configured to provide the second power supply to the dual backup conference unit; and the conference backup controller is configured to open an audio transmission channel corresponding to the dual backup conference unit and realize switching between a main transmission channel and a backup transmission channel when malfunction of the dual backup conference unit during the audio signal transmission is detected.
